# EUROPEAN PATENT APPLICATION

(11) **EP 4 617 231 A1**
(43) Date of publication of application: **17.09.2025**
(21) Application number: 24194309.1
(22) Date of filing: 13.08.2024
(51) Int. Cl.: C01B 3/00, C01F 11/02, C25B 1/01, C25B 1/02, C25B 9/19, C25B 11/042, C25B 13/05, H01M 14/00

(54) **HYDROGEN ABSORPTION/DISCHARGE DEVICE AND HYDROGEN ABSORPTION/DISCHARGE MODULE**

(30) Priority: 15.03.2024 JP 2024041281
(71) Applicant: Kabushiki Kaisha Toshiba, Tokyo 105-0023 (JP)
(72) Inventor: NAKA, Tomomichi, Minato-ku, Tokyo, 105-0023 (JP)
(74) Representative: Hoffmann Eitle

(57) **Abstract**

A hydrogen absorption/discharge device includes an absorption/discharge part, a first electrode located at a first end portion side of the absorption/discharge part, a second electrode located at a second end portion side of the absorption/discharge part, and buffer layers located respectively between the first electrode and the first end portion of the absorption/discharge part and between the second electrode and the second end portion of the absorption/discharge part; the absorption/discharge part includes a material that allows permeation of hydrogen and hydride-ion conduction; and the second end portion faces the first end portion.

## Description

### FIELD

Embodiments described herein relate generally to a hydrogen absorption/discharge device and a hydrogen absorption/discharge module.

### BACKGROUND

Recent years have seen advances in the utilization of hydrogen. Carbon dioxide is produced when burning fossil fuels such as, for example, coal, petroleum, natural gas, etc., but is not produced when burning hydrogen. Therefore, the utilization of hydrogen is desirable from the perspective of environmental protection.

When hydrogen is used as fuel, a raw material, or the like, it is necessary to store and transport hydrogen. Technologies proposed for storing and transporting hydrogen include, for example, storing compressed hydrogen in a high-pressure cylinder or the like, storing liquefied hydrogen in a tank, reacting hydrogen with toluene to form methylcyclohexane (an organic halide), using ammonia as a medium to store and transport hydrogen, and storing hydrogen in a hydrogen-absorbing alloy.

However, the storage and transport efficiency of hydrogen using such technology is poor due to the heavy weight and safety problems during storage and transport.

It is therefore desirable to develop technology that can increase the efficiency of storing and transporting hydrogen.

### BRIEF DESCRIPTION OF THE DRAWINGS

FIG. 1 is a schematic cross-sectional view illustrating a hydrogen absorption/discharge device according to an embodiment;
FIG. 2 is a graph illustrating the temperature dependence of the conductivity of titanium nitride;
FIG. 3 is a schematic perspective view illustrating a hydrogen absorption/discharge module; and
FIG. 4 is a schematic perspective view illustrating a hydrogen absorption/discharge module.

### DETAILED DESCRIPTION

A hydrogen absorption/discharge device according to an embodiment includes an absorption/discharge part, a first electrode located at a first end portion side of the absorption/discharge part, a second electrode located at a second end portion side of the absorption/discharge part, and buffer layers located respectively between the first electrode and the first end portion of the absorption/discharge part and between the second electrode and the second end portion of the absorption/discharge part; the absorption/discharge part includes a material that allows permeation of hydrogen and hydride-ion conduction; and the second end portion faces the first end portion.

Exemplary embodiments will now be described with reference to the drawings. In the specification of the application and the drawings, components similar to those described in regard to a drawing thereinabove are marked with like reference numerals, and a detailed description is omitted as appropriate.

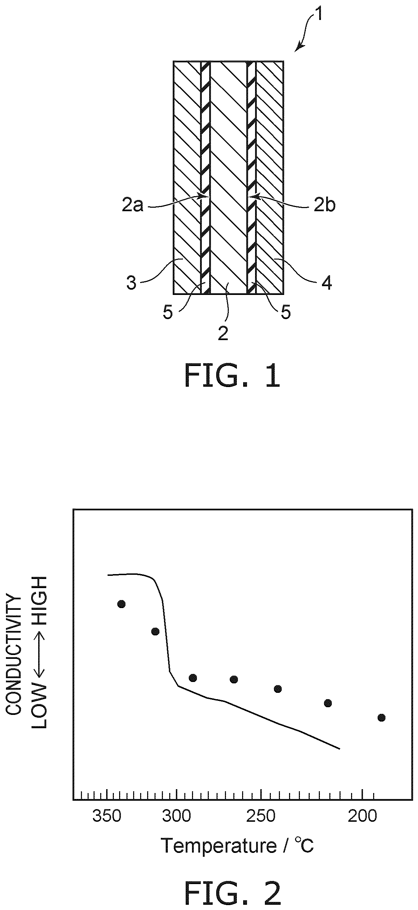

FIG. 1 is a schematic cross-sectional view illustrating a hydrogen absorption/discharge device 1 according to an embodiment.

As shown in FIG. 1, the hydrogen absorption/discharge device 1 includes, for example, an absorption/discharge part 2, an electrode 3 (corresponding to an example of a first electrode), an electrode 4 (corresponding to an example of a second electrode), and buffer layers 5.

The absorption/discharge part 2 includes, for example, an end portion 2a (corresponding to an example of a first end portion), and an end portion 2b (corresponding to an example of a second end portion) that faces the end portion 2a. The absorption/discharge part 2 can, at a prescribed temperature, switch between absorbing hydrogen and discharging the absorbed hydrogen according to the polarity of a voltage applied to the end portion 2a or the end portion 2b.

The absorption/discharge part 2 includes, for example, a material that allows permeation of hydrogen and hydride-ion conduction. The absorption/discharge part 2 can include, for example, Ba*_{w}*Li*ₓ*H*_{y}*O*_{z}*. For example, w = 0.1 to 3.0, x = 0.1 to 2.0, y = 0.1 to 5.0, and z = 0.1 to 2.0.

In such a case, when the absorption/discharge part 2 includes Ba*_{w}*Li*ₓ*H*_{y}*O*_{z}*, the absorption/discharge part 2 can absorb hydrogen and discharge hydrogen at a temperature of about 300 °C to 340 °C. In other words, hydrogen can be absorbed and discharged at a relatively low temperature, and so the hydrogen absorption operation and the hydrogen discharge operation are easy.

The configuration of the absorption/discharge part 2 is not particularly limited. For example, the absorption/discharge part 2 may be film-shaped, plate-shaped, block-shaped, columnar, etc. The shape of the absorption/discharge part 2 when viewed along a direction from the end portion 2a toward the end portion 2b is not particularly limited. For example, the shape of the absorption/discharge part 2 can be circular, polygonal such as quadrilateral, hexagonal, or the like, a shape formed from straight lines, curves, etc.

The hydrogen storage capacity can be increased by increasing the volume of the absorption/discharge part 2. However, chipping, cracking, etc., of the absorption/discharge part 2 occur easily when the volume of the absorption/discharge part 2 is too large. Therefore, the volume of the absorption/discharge part 2 can be set as appropriate according to the required hydrogen storage capacity, the rigidity of the absorption/discharge part 2 due to the material, etc.

For example, the electrode 3 is located at the end portion 2a side of the absorption/discharge part 2.

For example, the electrode 4 is located at the end portion 2b side of the absorption/discharge part 2.

For example, the electrode 3 and the electrode 4 are formed from a conductive material such as a metal, etc. In such a case, the ionization tendency of the material of the electrode 3 can be set to be greater than the ionization tendency of the material of the electrode 4. The material of the electrode 3 can be, for example, titanium (Ti). The material of the electrode 4 can be, for example, palladium (Pd).

Here, materials that allow hydride-ion conduction have high reducibility. Therefore, when the electrode 3 and the electrode 4 contact the absorption/discharge part 2, there is a risk that the electrode 3 and the electrode 4 may be reduced, and the conductivity of the electrodes 3 and 4 can no longer be maintained.

Therefore, the buffer layers 5 are located respectively between the electrode 3 and the end portion 2a of the absorption/discharge part 2 and between the electrode 4 and the end portion 2b of the absorption/discharge part 2. The buffer layers 5 can be formed from a material that is not easily reduced by a material allowing hydride-ion conduction, and are configured to maintain conductivity at the temperatures of hydrogen absorption and hydrogen discharge. Also, the buffer layers 5 are permeable to hydrogen.

When Ba*_{w}*Li*ₓ*H*_{y}*O*_{z}* is used as the material that allows hydride-ion conduction as described above, the temperatures of hydrogen absorption and hydrogen discharge are about 300 °C to 340 °C. Therefore, the buffer layers 5 can be formed from a material configured to maintain conductivity at a temperature of about 300 °C to 340 °C. For example, the buffer layers 5 can include, independently, at least one of a polycrystalline film including a nitride of titanium, tantalum (Ta), or the like, a perovskite compound, a hydrogen-including perovskite compound, or a hydrate of at least one of a perovskite compound or a hydrogen-including perovskite compound.

According to knowledge obtained by the inventor, when the buffer layers 5 include, for example, titanium nitride (TiN), the reduction of the electrodes 3 and 4 by the material allowing hydride-ion conduction can be suppressed, and the conductivity of the buffer layers 5 can be maintained at a temperature of about 300 °C to 340 °C.

FIG. 2 is a graph illustrating the temperature dependence of the conductivity of titanium nitride.

The black circles in FIG. 2 illustrate a film including titanium nitride. The thickness of the film including titanium nitride was 300 nm. The line in FIG. 2 illustrates a film including molybdenum (Mo). For example, there are cases where molybdenum is used because it is necessary for the electrode material to be heat-resistant. The molybdenum in FIG. 2 is a comparative example of an electrode material requiring heat resistance.

It can be seen from FIG. 2 that high conductivity (low electrical resistance) can be obtained in the temperature range of not less than 300 °C when the material of the buffer layers 5 is titanium nitride. For example, when the material of the buffer layers 5 is titanium nitride, a conductivity equal to that of molybdenum can be obtained in the temperature range of not less than 300 °C. Because oxidization of molybdenum starts at about 400 °C, there is a risk that degradation may occur over time at a temperature of about 300 °C to 340 °C. Therefore, molybdenum cannot be used as the buffer layers 5 from the perspective of the life.

When the material of the buffer layers 5 is titanium nitride, the reduction of the electrodes 3 and 4 by Ba*_{w}*Li*ₓ*H*_{y}*O*_{z}* can be suppressed; the electrode 3 and the buffer layer 5 can function as an electrode in the temperature range of not less than 300 °C; and the electrode 4 and the buffer layer 5 can function as an electrode in the temperature range of not less than 300 °C.

When the buffer layers 5 are too thin, there is a risk that pinholes or the like may occur, and the electrode 3 and the electrode 4 may be reduced by the Ba*_{w}*Li*ₓ*H*_{y}*O*_{z}*. When the buffer layers 5 are too thick, there is a risk that the resistance of the buffer layers 5 may increase, the voltage that is applied to the hydrogen absorption/discharge device 1 when absorbing hydrogen and discharging the absorbed hydrogen may increase, and the absorption and discharge responsiveness may degrade. For example, when the buffer layers 5 include titanium nitride, it is favorable for the thicknesses of the buffer layers 5 to be about several hundred nm (e.g., about 100 nm to 500 nm).

For example, the electrode 3, the electrode 4, and the buffer layers 5 can be sequentially formed on the end portions 2a and 2b of the absorption/discharge part 2 by using a film formation technique such as sputtering, CVD (Chemical Vapor Deposition), etc. The electrode 3 and the buffer layer 5 may be formed as a continuous body, and the electrode 3 and the buffer layer 5 that are a continuous body may be compression-bonded to the end portion 2a of the absorption/discharge part 2. The electrode 4 and the buffer layer 5 may be formed as a continuous body, and the electrode 4 and the buffer layer 5 that are a continuous body may be compression-bonded to the end portion 2b of the absorption/discharge part 2.

For example, the absorption/discharge part 2 can be formed by pressurized heating of a powder of the material to be used. Or, for example, the absorption/discharge part 2 may be formed using a film formation technique such as physical vapor deposition (PVD), sputtering, etc.

Effects of the hydrogen absorption/discharge device 1 will now be described.

When the hydrogen absorption/discharge device 1 absorbs hydrogen, the temperature of the hydrogen absorption/discharge device 1 is set to a prescribed temperature; and hydrogen is supplied to the hydrogen absorption/discharge device 1. Then, a negative voltage is applied to the electrode 3. Or, a positive voltage is applied to the electrode 4. For example, the anode of a DC power supply is electrically connected to the electrode 3; the cathode of the DC power supply is electrically connected to the electrode 4; and a prescribed direct current is caused to flow from the electrode 3 side toward the electrode 4 side of the absorption/discharge part 2.

When the prescribed current flows in the absorption/discharge part 2 from the electrode 3 side toward the electrode 4 side at the prescribed temperature, hydrogen adsorbs to the absorption/discharge part 2 and is held (stored). In such a case, as the current continues to flow in the absorption/discharge part 2, the hydrogen is absorbed by the absorption/discharge part 2 up to the storage limit.

For example, when the absorption/discharge part 2 includes Ba*_{w}*Li*ₓ*H*_{y}*O*_{z}*, the temperature of the absorption/discharge part 2 can be about 300 °C to 340 °C. The current value of the current that can flow in the absorption/discharge part 2 may be different according to the size of the absorption/discharge part 2. The current that flows in the absorption/discharge part 2 is, for example, about 10 µA to 10 A.

When discharging the hydrogen absorbed by the hydrogen absorption/discharge device 1, the temperature of the hydrogen absorption/discharge device 1 is set to the prescribed temperature; and a positive voltage is applied to the electrode 3. Or, a negative voltage is applied to the electrode 4. For example, the cathode of a DC power supply is electrically connected to the electrode 3; the anode of the DC power supply is electrically connected to the electrode 4; and a prescribed direct current is caused to flow from the electrode 4 side toward the electrode 3 side of the absorption/discharge part 2.

When the prescribed current flows in the absorption/discharge part 2 from the electrode 4 side toward the electrode 3 side at the prescribed temperature, the hydrogen that is absorbed by the absorption/discharge part 2 is discharged.

For example, the temperature of the absorption/discharge part 2 when discharging the hydrogen can be equal to the aforementioned temperature of the absorption/discharge part 2 when absorbing the hydrogen. Also, for example, the value of the current flowing to discharge the hydrogen can be equal to the aforementioned value of the current flowing to absorb the hydrogen.

In other words, hydrogen absorption and hydrogen discharge can be switched by switching the polarity of the voltage applied to the electrodes 3 and 4 (the direction of the current flowing in the absorption/discharge part 2). Therefore, the operation efficiency of absorbing hydrogen and discharging hydrogen can be increased.

In other words, the efficiency of storing and transporting hydrogen can be increased by using the hydrogen absorption/discharge device 1 according to the embodiment.

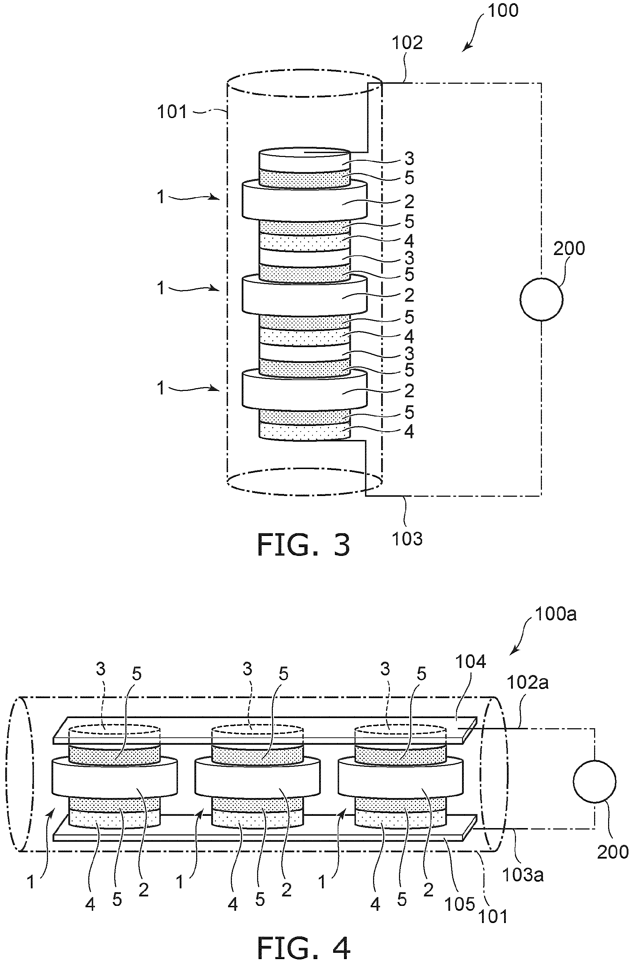

FIG. 3 is a schematic perspective view illustrating a hydrogen absorption/discharge module 100.

As shown in FIG. 3, the hydrogen absorption/discharge module 100 includes, for example, the hydrogen absorption/discharge device 1, a container 101, a terminal 102 (corresponding to an example of a first terminal), and a terminal 103 (corresponding to an example of a second terminal).

At least one hydrogen absorption/discharge device 1 can be included.

The hydrogen absorption/discharge module 100 illustrated in FIG. 3 includes three hydrogen absorption/discharge devices 1. By including multiple hydrogen absorption/discharge devices 1, the amount of hydrogen that can be absorbed can be increased.

When the multiple hydrogen absorption/discharge devices 1 are included, for example, the multiple hydrogen absorption/discharge devices 1 can be connected in series. For example, as shown in FIG. 3, the electrode 4 of one hydrogen absorption/discharge device 1 and the electrode 3 of an adjacent hydrogen absorption/discharge device 1 can be electrically connected. For example, the electrode 4 and the electrode 3 can be bonded by laser welding, etc. In such a case, the configurations of the hydrogen absorption/discharge devices 1 that are connected in series are the same, and so the hydrogen storage capacity can be easily modified merely by modifying the number of the hydrogen absorption/discharge devices 1.

The container 101 stores the hydrogen absorption/discharge device 1. The configuration of the container 101 is not particularly limited. The container 101 illustrated in FIG. 3 has a circular tubular shape of which the two ends are closed.

Here, when the absorption/discharge part 2 included in the hydrogen absorption/discharge device 1 includes Ba*_{w}*Li*ₓ*H*_{y}*O*_{z}*, there is a risk that the Ba*_{w}*Li*ₓ*H*_{y}*O*_{z}* may sublimate when moisture included in the atmosphere contacts the Ba*_{w}*Li*ₓ*H*_{y}*O*_{z}*. Therefore, the container 101 is formed from a material that is difficult for the moisture included in the atmosphere to permeate.

When absorbing and discharging hydrogen as described above, there are cases where the container 101 that stores the hydrogen absorption/discharge device 1 is heated. In other words, there are cases where the hydrogen absorption/discharge device 1 is heated via the container 101. Therefore, the melting point of the material of the container 101 can be set to be greater than the heating temperature of at least the absorption/discharge part 2.

Therefore, for example, the container 101 can be formed from a metal such as stainless steel, etc.

The terminal 102 is formed from a conductive material such as a metal, etc. The terminal 102 and the container 101 are insulated. One end portion of the terminal 102 is electrically connected with the electrode 3 of the hydrogen absorption/discharge device 1 stored in the container 101. For example, the one end portion of the terminal 102 can be bonded to the electrode 3 by laser welding, etc. The other end portion of the terminal 102 is exposed outside the container 101.

The terminal 103 is formed from the conductive material such as a metal, etc. The terminal 103 and the container 101 are insulated. One end portion of the terminal 103 is electrically connected with the electrode 4 of the hydrogen absorption/discharge device 1 stored in the container 101. For example, the one end portion of the terminal 103 can be bonded to the electrode 4 by laser welding, etc. The other end portion of the terminal 103 is exposed outside the container 101.

When absorbing hydrogen and discharging hydrogen, a power supply circuit 200 and the like can be electrically connected to the terminals 102 and 103 exposed outside the container 101. The switching of the polarity of the applied voltage (the direction of the current flowing in the absorption/discharge part 2) when absorbing hydrogen and discharging hydrogen can be similar to that described above.

In such a case, the hydrogen absorption/discharge device 1 can be heated via the container 101 when absorbing hydrogen and discharging hydrogen. Therefore, better energy conservation can be realized because the heating range can be small.

When absorbing hydrogen, the hydrogen can be supplied to the interior of the container 101. When discharging hydrogen, the hydrogen can be extracted via the container 101. Therefore, diffusion of the supplied hydrogen and the discharged hydrogen can be suppressed. Therefore, the hydrogen consumption can be reduced, and the hydrogen extraction efficiency can be increased.

When transporting the stored hydrogen, the end portion of the terminal 102 and the end portion of the terminal 103 that are exposed outside the container 101 can be covered with an insulating cover, etc.

The container 101 can include a lid and/or valve for supplying and discharging hydrogen. In such a case, it is favorable for the lid and/or valve to have an airtight structure that can suppress penetration into the container 101 of the moisture included in the atmosphere.

A pipe can be connected to the container 101 when absorbing hydrogen and discharging hydrogen. For example, it is sufficient for the pipe to be connected via a hole or the like made in the container 101, connected by detaching the lid of the container 101, or connected via a valve or the like of the container 101.

The container 101 can include a hole, notch, or the like for absorbing hydrogen and discharging hydrogen. When the absorption of the hydrogen is completed, it is sufficient to plug the hole, the notch, or the like provided in the container 101 by, for example, laser welding, etc.

FIG. 4 is a schematic perspective view illustrating a hydrogen absorption/discharge module 100a.

As shown in FIG. 4, the hydrogen absorption/discharge module 100a includes, for example, the hydrogen absorption/discharge device 1, the container 101, a terminal 102a, a terminal 103a, a connection plate 104, and a connection plate 105.

At least one hydrogen absorption/discharge device 1 can be included.

The hydrogen absorption/discharge module 100a illustrated in FIG. 4 includes three hydrogen absorption/discharge devices 1. By including multiple hydrogen absorption/discharge devices 1, the amount of hydrogen that can be absorbed can be increased.

The hydrogen absorption/discharge module 100 illustrated in FIG. 3 includes the multiple hydrogen absorption/discharge devices 1 that are connected in series.

In contrast, the hydrogen absorption/discharge module 100a illustrated in FIG. 4 includes the multiple hydrogen absorption/discharge devices 1 that are connected in parallel.

For example, the electrodes 3 of the multiple hydrogen absorption/discharge devices 1 can be electrically connected to the connection plate 104. For example, the connection plate 104 and the electrodes 3 can be bonded by laser welding, etc.

For example, the electrodes 4 of the multiple hydrogen absorption/discharge devices 1 can be electrically connected to the connection plate 105. For example, the connection plate 105 and the electrodes 4 can be bonded by laser welding, etc.

For example, the connection plate 104 and the connection plate 105 can have band shapes and can be formed from a conductive material such as copper, etc. Thus, the multiple hydrogen absorption/discharge devices 1 can be connected in parallel by the connection plates 104 and 105. In such a case, the configurations of the hydrogen absorption/discharge devices 1 connected in parallel are the same, and so the hydrogen storage capacity can be easily modified merely by modifying the number of the hydrogen absorption/discharge devices 1.

The multiple hydrogen absorption/discharge devices 1 also can be connected in parallel by the electrodes 3 and 4. For example, the absorption/discharge parts 2 that include the buffer layers 5 can be arranged between a band-shaped electrode 3 and a band-shaped electrode 4. Thus, the connection plates 104 and 105 can be omitted, and so the hydrogen absorption/discharge module 100a can be smaller.

However, the electrode 3 is formed from titanium; and the electrode 4 is formed from palladium. Therefore, when the sizes of the electrodes 3 and 4 are increased, there is a risk that the manufacturing cost of the hydrogen absorption/discharge module 100a may increase.

Therefore, the configuration in which the multiple hydrogen absorption/discharge devices 1 are connected in parallel can be modified as appropriate according to the required size, manufacturing cost, and the like of the hydrogen absorption/discharge module 100a.

Here, it may be considered that the amount of hydrogen absorbed would be about the same for the same number of the hydrogen absorption/discharge devices 1, whether the multiple hydrogen absorption/discharge devices 1 are connected in series or connected in parallel.

When, however, the number of the hydrogen absorption/discharge devices 1 connected in series is large, there is a risk that the resistance value of the hydrogen absorption/discharge module 100 may become large, and the current flowing in the absorption/discharge parts 2 may decrease. In such a case, the power consumption would increase if the voltage applied to the hydrogen absorption/discharge module 100 is increased to increase the current flowing in the absorption/discharge parts 2.

Therefore, from the perspective of better energy conservation, it is favorable for the multiple hydrogen absorption/discharge devices 1 to be connected in parallel.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments herein may be made without departing from the spirit of the inventions. The accompanying claims and their equivalents are intended to cover such forms or modifications as would fall within the scope and spirit of the inventions. Moreover, the above-mentioned embodiments can be combined mutually and can be carried out.

## Claims

1. A hydrogen absorption/discharge device (1), comprising:
an absorption/discharge part (2) including a material configured to allow
permeation of hydrogen, and
hydride-ion conduction;
a first electrode (3) located at a first end portion (2a) side of the absorption/discharge part (2);
a second electrode (4) located at a second end portion (2b) side of the absorption/discharge part (2), the second end portion (2b) facing the first end portion (2a); and
buffer layers (5) located respectively between the first electrode (3) and the first end portion (2a) of the absorption/discharge part (2) and between the second electrode (4) and the second end portion (2b) of the absorption/discharge part (2).

2. The hydrogen absorption/discharge device (1) according to claim 1, wherein
the absorption/discharge part (2) is configured to absorb the hydrogen by a current flowing from the first electrode (3) side toward the second electrode (4) side, and
the absorption/discharge part (2) is configured to discharge the absorbed hydrogen by a current flowing from the second electrode (4) side toward the first electrode (3) side.

3. The hydrogen absorption/discharge device (1) according to claim 1 or 2, wherein
the absorption/discharge part (2) includes Ba*_{w}*Li*ₓ*H*_{y}*O*_{z}*, and
w = 0.1 to 3.0, x = 0.1 to 2.0, y = 0.1 to 5.0, and z = 0.1 to 2.0.

4. The hydrogen absorption/discharge device (1) according to any one of claims 1 to 3, wherein
the buffer layers (5) include a metal nitride, and are permeable to the hydrogen.

5. A hydrogen absorption/discharge module (100), comprising:
at least one hydrogen absorption/discharge device (1) of the hydrogen absorption/discharge device (1) according to any one of claims 1 to 4;
a container (101) configured to store the at least one hydrogen absorption/discharge device (1);
a first terminal (102) including
one end portion electrically connected with at least one of the first electrodes (3) of the at least one hydrogen absorption/discharge device (1) stored in the container (101), and
another end portion exposed outside the container (101); and
a second terminal (103) including
one end portion electrically connected with at least one of the second electrodes (4) of the at least one hydrogen absorption/discharge device (1) stored in the container (101), and
another end portion exposed outside the container (101).
